## Europäisches Patentamt
## European Patent Office
## Office européen des brevets

(11) Veröffentlichungsnummer: **0 145 001**
**B1**

(12) **EUROPÄISCHE PATENTSCHRIFT**

(45) Veröffentlichungstag der Patentschrift:
**18.10.89**

(21) Anmeldenummer: **84115029.5**

(22) Anmeldetag: **10.12.84**

(51) Int. Cl.⁴: **G 01 L 1/16, G 01 L 1/26, B 29 C 39/08**

(54) Kraftmesseinrichtung.

(30) Priorität: **12.12.83 DE 3344901**

(43) Veröffentlichungstag der Anmeldung:
**19.06.85 Patentblatt 85/25**

(45) Bekanntmachung des Hinweises auf die Patenterteilung:
**18.10.89 Patentblatt 89/42**

(84) Benannte Vertragsstaaten:
**AT BE CH DE FR GB IT LI NL SE**

(56) Entgegenhaltungen:
**EP-A- 0 145 001**
**WO-A-86/03584**
**DE-A- 1 932 899**
**DE-A- 3 212 099**
**DE-C- 630 039**
**DE-C- 650 243**
**FR-A- 516 321**
**FR-A- 2 126 695**
**GB-A- 1 347 586**
**US-A- 3 410 135**
**US-A- 3 582 691**
**US-A- 4 127 788**
**US-A- 4 175 429**

(73) Patentinhaber: **Pfister GmbH, Stätzlinger Strasse 70, D-8900 Augsburg (DE)**

(72) Erfinder: **Häfner, Hans W., Fichtenweg 15, D-8890 Aichach-Walchshofen (DE)**

(74) Vertreter: **Kahler, Kurt, Dipl.-Ing., Postfach 248 Gerberstrasse 3, D-8948 Mindelheim (DE)**

ACTORUM AG

## Beschreibung

Die Erfindung betrifft eine Kraftmeßeinrichtung und ein Verfahren zur Herstellung derselben gemäß dem Oberbegriff des Patentanspruchs 1 bzw. 10.

US-A-3 410 153 zeigt eine Kraftmeßzelle mit einem Basisteil, das eine zylindrische Vertiefung besitzt, in deren Bodenbereich sich elastomeres Material befindet, in dem ein Drucksensor eingebettet ist, der mit einem Druckmeßgerät in Verbindung steht. Über dem elastomeren Material ist ein Krafteinleitungskolben in die zylindrische Vertiefung eingesetzt. Zur Vermeidung von Reibung kann ein umlaufender Spalt vorgesehen sein, der zu einem geringen Teil von unten her mit elastomerem Material gefüllt ist. Zur Vermeidung eines Verkantens ist ferner ein federnder Zwischenring im oberen Bereich der zylindrischen Vertiefung vorgesehen. Da das elastomere Material nicht an den Metallflächen haftet, ist auch bei geringerer Spaltbreite ein gewisses Hochsteigen des elastomeren Materials in dem Spalt gegeben, wodurch das Meßergebnis verfälscht wird. Der obere Umfangsring führt ebenfalls wieder Reibungsverluste ein; außerdem werden nicht zu messende Querkräfte nicht an das Basisteil abgeleitet, wenn der Umfangsring so nachgiebig ist, daß sich der Kolben schrägstellen kann.

Die FR-A-516 321 zeigt eine Meßeinrichtung mit noch komplizierterem Aufbau, jedoch mit der gleichen Funktion und noch größeren Reibungsverlusten als bei der Meßvorrichtung gemäß US-A-3 410 135.

Die US-A-4 127 788 beschreibt eine Vorrichtung zum Feststellen von Deformierungen in Minendecken mit einem offenen zylindrischen Gehäuse, das mit einem Innengewinde versehen ist. In einen Block von Kunstharz ist ein Drucksensor eingebettet und der Block besitzt ein Außengewinde und kann in das zylindrische Gehäuse eingeschraubt werden. Dieses Einschrauben wird durch eine Gegenschraube begrenzt. Die bekannte Vorrichtung ist nicht als exakte Meßeinrichtung gedacht, noch dafür geeignet, sondern lediglich zur Feststellung einer erheblichen Druckänderung auf das zylindrische Gehäuse bzw. die eingeschraubten Teile, wobei erhebliche Reibungen in den Gewinden auftreten.

Die US-A-4 175 429 beschreibt eine Einrichtung ähnlich derjenigen der US-A-3 410 135, jedoch mit einem erheblichen seitlichen Spalt, der an der Unterkante des zylindrischen Krafteinleitungsteils gegenüber der Mantelfläche der zylindrischen Vertiefung durch eine ringsumlaufende Dichtung abgedichtet ist, die ein Ausdehnen des elastomeren Materials in den Spalt verhindert. Eine derartige Dichtung verursacht wiederum eine das Meßergebnis verfälschende Reibung. Außerdem kann sich auf Grund des sehr breiten leeren Ringspaltes zwischen den Zylinderflächen des Krafteinleitungsteiles und der zylindrischen Vertiefung ein erhebliches Verkanten ergeben, so daß auch die nicht zu messenden Querkräfte auf den im elastomeren Material eingebetteten Sensor übertragen werden können und keine Ableitung dieser Querkräfte in das Basisteil erfolgt.

Die FR-A-2 126 695 befaßt sich ebenfalls mit einer im Bergbau verwendeten Warneinrichtung, bei der ein elastomerer Block erheblicher Höhe zwischen zwei Platten angeordnet ist. In dem Block ist ein Drucksensor eingebettet. Für eine exakte Kraftmessung ist die Vorrichtung nicht geeignet, da der Block sich seitlich ausdehnen kann, so daß der auf ihn ausgeübte Druck nicht vollständig auf den Drucksensor übertragen wird, wie es der Fall wäre, wenn der Block vollständig starr umschlossen wäre.

Die DE-A-1 932 899 befaßt sich mit einem flächigen Meßwertgeber zum Umwandeln von Kräften oder Drücken in elektrische Widerstandsänderungen. Hierbei ist zwischen zwei elastischen Teilen aus Stahl ein flächiges Meßelement mit einem gitterförmig angeordneten Meßdraht angeordnet, der sich in einer isolierenden Schicht befindet. Diese kann aus einem aushärtbaren Kunstharz bestehen. Die Einrichtung ist äußerst empfindlich gegenüber Querkräften. Diese verfälschen das Meßergebnis erheblich und können sehr leicht zu einer Beschädigung des Sensors führen.

Die DE-C2-3 212 099 offenbart eine Kraftmeßeinrichtung mit einer zur Kraftrichtung geneigten Kraftzerlegungsebene, wobei zwischen einem Krafteinleitungsteil und einem Abstützteil, die zueinander komplementäre Keilflächen besitzen, eine elastische Zwischenlage angeordnet ist, die die Form eines flachen Kissens oder eines Polsters aufweist. Die elastische Zwischenlage dient dazu, die Kraftzerlegung mittels der Keilanordnung reibungsfrei zu gestalten, wobei die Messung der auf das Kraftaufnahmeteil ausgeübten Kraft aufgrund der Horizontalkomponente erfolgt, die durch Horizontalverschiebung des Kraftaufnahmeteils auf eine ortsfest angeordnete Meßvorrichtung ausgeübt wird.

Der Erfindung liegt die Aufgabe zugrunde, eine Kraftmeßeinrichtung anzugeben, die äußerst einfach und robust aufgebaut ist, Querkräfte sehr gut ableitet, ohne daß das Meßergebnis verfälscht oder die Einrichtung beschädigt wird, und die trotzdem eine verhältnismäßig hohe Meßgenauigkeit besitzt. Diese Aufgabe wird mit den kennzeichnenden Merkmalen der Ansprüche 1, 9 bzw. 10 gelöst.

Die Blasenfreiheit des elastomeren Stoffes gewährleistet, daß sich dieses Material wie eine nichtkomprimierbare Flüssigkeit verhält und die auf die Einrichtung ausgeübte Kraft auch vollständig auf den Drucksensor übertragen wird. Da das Kraftaufnahmeteil und das Abstützteil fest an dem elastomeren Stoff haften, könnte durch Querkräfte zwar eine geringe Horizontalverschiebung des Kraftaufnahmeteils gegenüber dem Abstützteil auftreten; diese Querkräfte werden jedoch vollständig über den elastomeren Stoff im engen Ringspalt auf das Abstützteil übertragen, so daß sie keinen Einfluß auf den Drucksensor haben.

Vor der Beschreibung von Ausführungsbeispielen im einzelnen, seien folgende allgemeine Erörterungen gegeben:

Die Erfindung stützt sich auf die Erkenntnis, daß das physikalische Verhalten von Elastomeren prinzipiell dem von Flüssigkeiten entspricht, so daß ein aus einer Belastung resultierender Druck über geeignete Meßfühler direkt in ein belastungsproportionales Meßsignal übergeführt werden kann. Abdichtungsprobleme treten nicht auf.

Zur besseren Kraftübertragung kann sich der Drucksensor bevorzugt in einer Aussparung im elastomeren Stoff befinden, die mit einem anderen Stoff höherer Viskosität ausgefüllt ist.

Als Drucksensoren kommen piezoelektrische Druckwandler oder Dehnungsmeßstreifen infrage. Die druckabhängige Vorrichtung kann auch hydraulisch wirken mit direkter Druckübertragung zu einer Anzeige.

Der elastomere Stoff ist bevorzugt Silikon- oder ein Natur-, Styrol-, Butadien-, Polysulfid-, Nitril-Kautschuk, ein Polyacrylat oder ein Polyurethan oder eine Mischung dieser Stoffe, gegebenenfalls mit Silicon.

Bei einer bevorzugten Ausbildung der erfindungsgemäßen Kraftmeßeinrichtung ist der elastomere Stoff mit den gegenüberliegenden Flächen der beiden Teile verbunden, vorzugsweise vulkanisiert.

Mittels einer Vielzahl von erfindungsgemäßen Kraftmeßeinrichtungen kann ein Kraftmeßteppich aufgebaut werden, wobei die Meßsignale aller Kraftmeßeinrichtungen für eine Auswertung zusammengeführt werden.

Die erfindungsgemäße Kraftmeßeinrichtung bzw. ein aus solchen aufgebauter Kraftmeßteppich kann zur Bunkerstandsmessung, zur Radlastmessung oder Achslastmessung verwendet werden.

Zwei Ausführungsbeispiele der erfindungsgemäßen Kraftmeßeinrichtung werden nachstehend unter Bezugnahme auf die Zeichnung beschrieben.

Fig. 1 zeigt schematisch einen Vertikalschnitt durch ein erstes Ausführungsbeispiel und

Fig. 2 und 3 ein zweites Ausführungsbeispiel in Vertikalschnitt bzw. in Draufsicht.

Zwischen zwei zueinander im wesentlichen parallelen Schwingplatten 1, 2 ist ein elastomerer Stoff 3 angeordnet. Bevorzugt wird der elastomere Stoff 3 jedoch auf die gegenüberliegenden Flächen der Schwingplatten 1, 2 vulkanisiert oder angeklebt.

Innerhalb des elastomeren Stoffes 3 ist ein Drucksensor, etwa ein piezoelektrischer Druckwandler 5 angeordnet, der über eine elektrische Leitung 7 mit einem Druckmeß- und Anzeigegerät 6 verbunden ist. Dieses Gerät kann ein Digital-Voltmeter aufweisen, das von dem von dem Wandler abgegebenen kraftproportionalen Signal beaufschlagt wird.

Beim Ausführungsbeispiel ist der piezoelektrische Druckwandler 5 in einem Stoff 4 eingebettet, der sich in einer Aussparung im elastomeren Stoff 3 befindet und eine höhere Viskosität als letzterer aufweist. Dieser Stoff 4 kann ein geleeförmiges Silikon sein.

Wird auf die vorzugsweise aus Metall bestehenden Schwingplatten 1 eine Kraft F ausgeübt, so wird diese auf den elastomeren Stoff 3 übertragen, der die Kraft auf den piezoelektrischen Druckwandler 5 druckproportional weitergibt.

Der piezoelektrische Wandler 5 sendet dann ein kraftproportionales Signal über die Leitung 7 an die Meß- und Anzeigevorrichtung 6.

An die Stelle des piezoelektrischen Druckwandlers könnte auch ein Dehnungsmeßstreifen treten, der in eine Wheatstonesche Brücke geschaltet ist.

Die Anzeige mit der Meß- und Anzeigevorrichtung kann in Kilogramm oder Newton erfolgen.

Eine andere Alternative der Druckaufnahme aus dem Elastomer bestände darin, in der Aussparung im elastomeren Stoff 3 eine Flüssigkeit anzuordnen, die über eine Flüssigkeitsleitung 7 direkt mit einem entsprechenden Meß- und Anzeigegerät in Verbindung steht, so daß sich eine hydraulische Direktanzeige ergibt.

Bevorzugt können bei einer flächig ungleichmäßig ausgeübten Kraft mehrere Druckwandler verteilt in dem elastomeren Stoff 3 vorgesehen sein. Die Schwingplatten 1 und 2 oder zumindest die Schwingplatte 1 hat dann eine erhebliche flächige Ausdehnung, beispielsweise in der Größe eines Lastkraftwagens, und die Druckwandler sind matrixartig über den Kraftmeßteppich verteilt. Die von diesen Druckwandlern abgegebenen Signale werden einer Auswertevorrichtung zugeführt, die daraus die ausgeübte Gesamtkraft berechnet und zur Anzeige bringt.

Besondere Anwendungsgebiete für die erfindungsgemäße Kraftmeßzelle sind dort gegeben, wo keine höchste Genauigkeit verlangt wird. Anwendungen sind bevorzugt Bunkermessung, Achslastmessung und Raddruckmessung.

Die Genauigkeit könnte dadurch erhöht werden, daß zur Vermeidung eines seitlichen Herausquellens des elastomeren Stoffes an einer der Schwingplatten 1 oder 2 seitliche Abdeckungen angebracht sind.

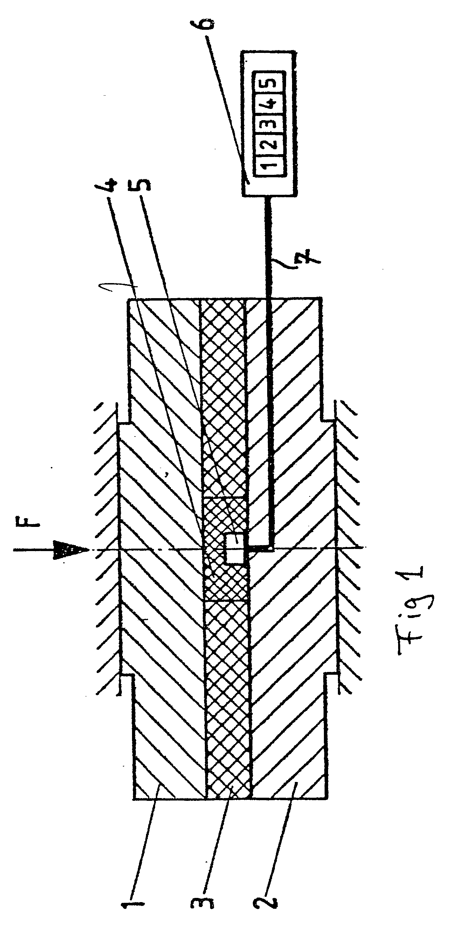

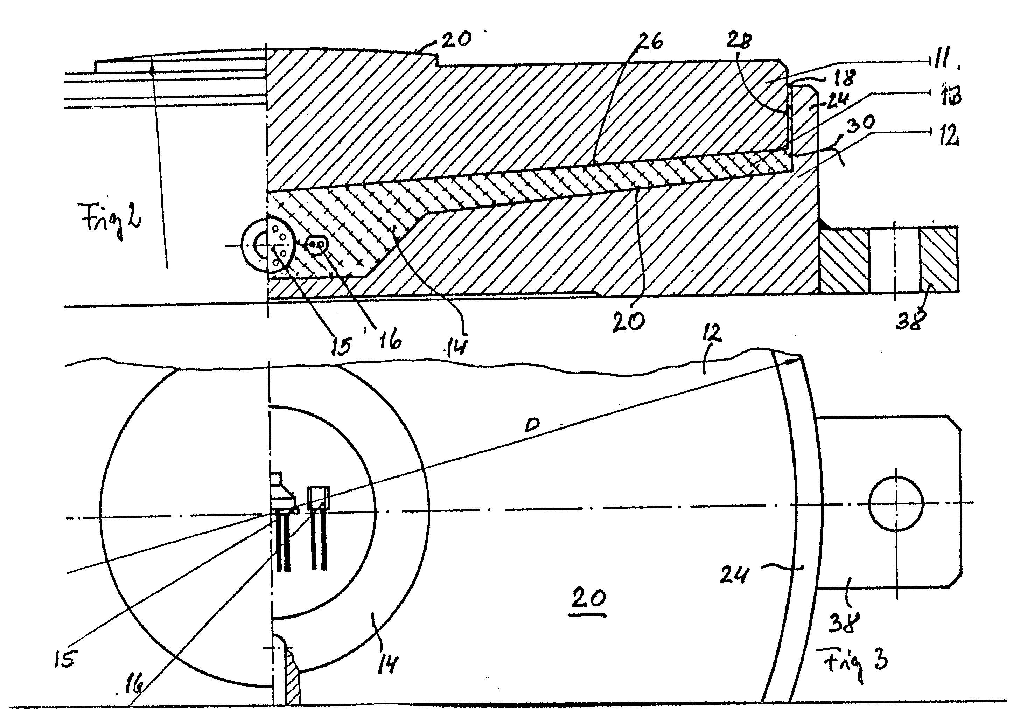

Diese Maßnahme ist bei einem praktischen Ausführungsbeispiel berücksichtigt, das in den Figuren 2 und 3 dargestellt ist. Zwischen einer oberen Platte 11 und einer unteren Platte 12 befindet sich der elastomere Stoff 13, in dem ein Drucksensor 15 mit dazugehörigem Temperaturkompensationswiderstand 16 angeordnet ist. Mittels Flansche 38 kann die untere Platte 12 auf einer Basis oder dergleichen befestigt werden, während die Kraft auf die Oberseite der oberen Platte 11 ausgeübt wird, die hierfür mit einer Kalotte 20 versehen sein kann.

Bei diesem Ausführungsbeispiel wird dem durch die beiden gegenüberliegenden Innenflächen der Platten 11 und 12 gebildeten Raum eine etwas spezifischere Form gegeben. Insbesondere ist die Unterseite 26 der oberen Platte nach unten etwas gewölbt etwa kegelig oder kugelig ausgeführt. Die Oberseite 20 der unteren Platte 12 kann ebenfalls eine entsprechende Wölbung besitzen, so daß sich eine Schalenform ergibt. Im Zentrum wird ein erweiterter Raum 14 gebildet, der zur Aufnahme des Drucksensors 15 und des Kompensationswiderstandes 16 dient. Die Schalenform der unteren Platte ist weiterhin dadurch ausgeprägt, daß umfangsmäßig ein Bund 24 hochgezogen ist, der zur Aufnahme der oberen Platte 11 dient. Die Abmessungen sind so getroffen, daß sich zwischen der Mantelfläche 28 der oberen Platte und der zylindrischen Innenfläche 30 des Bundes 24 nur ein äußerst schmaler Spalt 18 ergibt, der bei der Dimensionierung der gezeigten Ausführungsform in der Größenordnung von etwa 0,1 bis 2 mm, vorzugsweise im Bereich von 0,2 bis 0,7 mm liegt, wobei auch andere Spaltbreiten ohne Beeinflussung der prinzipiellen Funktion der Meßzelle möglich sind. Die geringe Spaltbreite hat den Vorteil, daß die Kraftmeßzelle eine hohe Steifigkeit erhält, so daß sich die Kraftmeßzelle äußerst rasch einschwingt. Ferner wird die Temperaturempfindlichkeit verringert.

Auch die Höhe des Spaltes 18 kann für eine Optimierung der Funktion der erfindungsgemäßen Kraftmeßzelle von Bedeutung sein. Diese Spalthöhe sollte insbesondere nicht zu klein sein, da über die beiden sich gegenüberliegenden Flächen 28 und 30 zum Teil erhebliche Querkräfte übertragen werden.

Durch die Optimierung des Spaltes 18 kann der Einfluß der temperaturabhängigen Federkennlinie von Silikon bei gleichzeitiger Reduzierung des Meßweges, der in der Größenordnung von 0,01 mm liegen kann, minimiert werden, wobei gleichzeitig eine hohe Querkraftsstabilität erreicht wird.

Durch Ausbildung der oberen Platte 11 in Form eines Schwimmkörpers wird der Effekt einer Selbstaufrichtung bei asymmetrischer Belastung unterstützt. Die Höhe des Spaltes 18 kann bei der in der Figur 2 gezeigten Dimensionierung in der Größenordnung zwischen 10 und 30 mm, vorzugsweise bei 15 bis 20 mm liegen.

Die in Figur 2 gezeigte Dimensionierung der Platten und des mit dem elastomeren Stoff ausgefüllten Zwischenraums wird als bevorzugte Lösung angesehen und zum Inhalt der Beschreibung gemacht, wobei entsprechende Abweichungen im Rahmen des Erfindungsgedankens ohne weiteres möglich sind.

Bei der Ausführungsform gemäß den Figuren 2 und 3 wird als Drucksensor ein Absolutdrucksensor verwendet, beispielsweise der Absolutdrucksensor KPY 14 der Firma Siemens AG, München, Deutschland und dieser Absolutdrucksensor 15 wird so in den elastomeren Stoff 13 eingebettet, daß er im wesentlichen keine Berührung mit den beiden Platten 11 und 12 besitzt. Dies hat den Vorteil einer konstanten Druckverteilung. Auch ist der Drucksensor, der Kompensationswiderstand und das Kabel optimal gegen äußere Einflüsse geschützt, insbesondere gegen Eindringen von Gasen und Feuchtigkeit, so daß die Meßzelle auch unter Wasser eingesetzt werden könnte.

Ein oder mehrere Kompensationswiderstände 16 dienen zur Kompensation des Temperaturverhaltens, wobei die Werte der Kompensationswiderstände in bekannter Weise mittels Computer abhängig von der tatsächlichen Kennlinie des Drucksensors und unter Berücksichtigung der Temperaturcharakteristik des Elastomers bestimmt werden.

Als elastomerer Stoff 13 kommen Kunststoffe mit Shore-Härten in der Größenordnung von 30 bis 70, vorzugsweise 40 bis 60 in Frage. Ein Beispiel für einen elastomeren Stoff 13 ist das Silikon RTV-ME 625 der Firma Wacker-Chemie AG, München, Deutschland.

Eine besondere Gleichförmigkeit und Unnachgiebigkeit des elastomeren Stoffes läßt sich dadurch erreichen, daß mittels eines neuartigen Verfahrens Luft- und Gasblasen aus dem elastomeren Stoff vor oder während seines Aushärtens entfernt werden.

Zur Herstellung einer erfindungsgemäßen Kraftmeßzelle werden in allgemein bekannter Weise zwei Kunststoffkomponenten unter Rühren gemischt und es wird eine entsprechende Menge der Mischung in die untere Platte 12 eingegossen. Beim Mischen und Eingießen läßt es sich im allgemeinen nicht vermeiden, daß Luftblasen in der Mischung eingeschlossen werden, die jedoch die Wirkung des erfindungsgemäßen Prinzips, nämlich die unnachgiebige Übertragung verfälschen würden.

Deshalb wird nach Aufsetzen der oberen Platte 11 die so gebildete Einheit einer erheblichen Beschleunigung in Richtung der späteren Kraftausübung unterworfen. Diese Beschleunigung kann in der Größenordnung von 20 bis 100 g (Erdbeschleunigung) liegen, vorzugsweise in der Größenordnung von 30 bis 50 g, was von der Art des verwendeten elastomeren Stoffes abhängt.

Um diese Beschleunigung zu erreichen, wird die Einheit aus den Platten 11, 12 und dem elastomeren Stoff 13 mit eingebettetem Drucksensor 15 und Kompensationswiderständen 16 in Rotation versetzt, vorzugsweise um eine vertikale Achse. Ein einfaches Instrument zur Durchführung dieses Verfahrens hat die Form einer Balkenwaage mit daran in größerem Abstand von dem Balken flexibel angeordneten Waagschalen (Apothekerwaage), wobei je eine Einheit auf einer Waagschale angeordnet ist und der Balken mittels eines Motors um eine vertikale Achse in Rotation versetzt wird. Die Drehzahl hängt dabei von den Abmessungen der Waage und der gewünschten Beschleunigung ab und kann vom Fachmann auf einfache Weise ermittelt werden. Auch die Dauer dieses Schleudervorgangs bestimmt sich nach der angewandten Beschleunigung und der Art des elastomeren Stoffes 13 und kann zwischen einigen Sekunden und mehreren Minuten oder auch höher liegen. Durch die hohe Beschleunigung wird die Luft aus dem elastomeren Stoff praktisch vollkommen herausgepreßt und kann nach oben entweichen. Obwohl der Schleudervorgang ohne Aufsetzen der Platte 11 erfolgen kann, unterstützt diese den Druck auf den elastomeren Stoff und damit die beschleunigte Entfernung der Luft- oder Gasblasen, wobei die bereits erwähnte Wölbung der Unterseite der oberen Platte 11 von Vorteil ist.

Soweit die Aushärtung des elastomeren Stoffes nicht bereits während des Schleudervorgangs erfolgt ist (was im allgemeinen nicht der Fall sein wird), läßt man den elastomeren Stoff nach dem Schleudervorgang bei horizontal liegender Kraftmeßzelle in Ruhe aushärten.

Der Vollständigkeit halber sei noch erwähnt, daß der Drucksensor 15 und der oder die Kompensationswiderstände 16 mit einem nicht gezeigten Kabel verbunden sind, das aus der Kraftmeßzelle herausgeführt und an die Meß- und Anzeigevorrichtung 6 angeschlossen ist.

Wie im Zusammenhang mit dem prinzipiellen ersten Ausführungsbeispiel angegeben, lassen sich die Kraftmeßzellen gemäß dem zweiten Ausführungsbeispiel in Vielfachanordnung von Drucksensoren zu einem Kraftmeßteppich zusammenführen.

Da der bei dem zweiten Ausführungsbeispiel verwendete Drucksensor im wesentlichen die gleiche Dichte aufweist wie das dabei verwendete Silikon, bleibt der Drucksensor im wesentlichen in einer Position in Abstand von den Innenflächen der unteren und oberen Platte, wobei gegebenenfalls eine geringfügige Abstützung mittels feiner Drähte erfolgen kann. Ähnliches gilt für die Kompensationswiderstände, obwohl deren Position und gegebenenfalls auch eine Berührung mit einer der Platten unkritisch ist.

Die Ausführungsform der erfindungsgemäßen Kraftmeßzelle gemäß den Figuren 2 und 3 ist in diesen Figuren annähernd im Maßstab 1:1 gezeigt, wobei eine derartige Kraftmeßzelle zur Bestimmung von Kräften von beispielsweise 5 bis 20 t einsetzbar sein kann.

Das Kraftaufnahmeteil und das Abstützteil sind bei den Ausführungsbeispielen im wesentlichen plattenförmig gezeigt. Es kommt jedoch auch jede beliebige andere Form in Frage, etwa eine Kugelkalottenform, Kegelform oder dergleichen, wobei lediglich dafür Sorge getragen werden muß, daß der elastomere Stoff von dem Kraftaufnahmeteil und dem Abstützteil im wesentlichen eingeschlossen ist.

## Patentansprüche

1. Kraftmeßeinrichtung mit einem Kraftaufnahmeteil (1; 11), einem Abstützteil (2; 12) und einem dazwischen vorgesehenen elastomeren Stoff (3; 13), der mit einem Drucksensor (5, 15) in Verbindung steht, wobei das Abstützteil (12) einen nach oben gezogenen Umfangsrand (24) besitzt und das Kraftaufnahmeteil (11) unter Bildung eines Ringspaltes (18) zwischen dem Umfangsmantel (28) des Kraftaufnahmeteils (11) und der zylindrischen Innenfläche (30) des Umfangrandes (24) in den Umfangsrand (24) eingelassen ist und sich im Ringspalt (18) elastomerer Stoff (13) befindet, dadurch gekennzeichnet, daß der elastomere Stoff (13) blasenfrei ist und mit den Kontaktflächen (28, 30) des Kraftaufnahmeteils (11) und des Abstützteiles (12) fest verbunden ist.

2. Kraftmeßeinrichtung nach Anspruch 1, dadurch gekennzeichnet, daß sich der Drucksensor (5) in einer Aussparung im elastomeren Stoff (3) befindet, die mit einem anderen Stoff (4) höherer Viskosität ausgefüllt ist.

3. Kraftmeßeinrichtung nach Anspruch 1 oder 2, dadurch gekennzeichnet, daß der Drucksensor (5) ein piezoelektrischer Sensor ist.

4. Kraftmeßeinrichtung nach einem der Ansprüche 1 bis 3, dadurch gekennzeichnet, daß der elastomere Stoff (13) ein Silikon-, ein Natur-, Styrol-, Butadien-, Polysulfid-, Nitril-Kautschuk, ein Polyacrylat oder ein Polyurethan oder eine Mischung zweier oder mehrerer dieser Stoffe ist und den Ringspalt (18) vollständig ausfüllt.

5. Kraftmeßeinrichtung nach einem der vorhergehenden Ansprüche, dadurch gekennzeichnet, daß die Innenfläche (26, 20) des Kraftaufnahmeteils (11) und/oder des Abstützteils (12) nach unten hin gewölbt ist.

6. Kraftmeßeinrichtung nach einem der Ansprüche 1 bis 5, dadurch gekennzeichnet, daß der elastomere Stoff (13) mit den Kontaktflächen (20, 26, 28, 30) des Kraftaufnahmeteils (11) und des Abstützteiles (12) vulkanisiert oder verklebt ist.

7. Kraftmeßeinrichtung nach Anspruch 6, dadurch gekennzeichnet, daß der Ringspalt (18) eine Werite in der Größenordnung 1/100 bis 1/1000 des Durchmessers der beiden Teile (11, 12) und eine Höhe in der Größenordnung zwischen 1/10 und 1/50 des Durchmessers aufweist.

8. Kraftmeßeinrichtung nach einem der vorhergehenden Ansprüche, dadurch gekennzeichnet, daß der Drucksensor (5) ein Absolutdrucksensor (15) ist, der im elastomeren Stoff (13) im Abstand von den Innenflächen (20, 26) der beiden Teile (11, 12) eingebettet ist.

9. Kraftmeßeinrichtung mit zwei großflächigen Platten (1, 2), zwischen denen eine elastische Zwischenlage angeordnet ist, dadurch gekennzeichnet, daß die elastische Zwischenlage ein blasenfreier elastomerer Stoff (3) ist, in dem eine Vielzahl von Drucksensoren (5) beabstandet voneinander eingebettet und gemeinsam an eine Meßvorrichtung (6) angeschlossen sind und der elastomere Stoff (3) mit den Kontaktflächen der beiden Platten (1, 2) fest verbunden, insbesondere vulkanisiert oder verklebt ist.

10. Verfahren zum Herstellen einer Kraftmeßeinrichtung nach einem der Ansprüche 1 bis 9, dadurch gekennzeichnet, daß in einer Komponentenmischung für einen aushärtbaren elastomeren Stoff (3, 13) die Aushärtung eingeleitet, eine gewünschte Menge der Mischung in ein bereits als Form dienendes, schalenförmig ausgebildetes Abstützteil (12) einer Kraftmeßeinrichtung eingegossen wird und daß das schalenförmige Abstützteil (12) derart um eine vertikale Achse zum Kreisen gebracht wird, daß die auftretenden Zentrifugalkräfte im wesentlichen senkrecht auf die eingefüllte Komponentenmischung wirken.

11. Verfahren nach Anspruch 10, dadurch gekennzeichnet, daß das Kreisen für eine Zeit von einigen Sekunden bis einigen Minuten ausgeführt wird und das endgültige Aushärten in Ruhestellung erfolgt.

## Claims

1. Force measuring device including a force receiving member (1; 11), a support member (2;

12) and elastomeric material (3; 13) provided therebetween and being in contact to a pressure sensor (5, 15), the support member (12) having a peripheral rim (24) projecting upward and the force receiving member (11) being inserted into this peripheral rim (24) forming an annular gap (18) between the peripheral surface (28) of the force receiving member (11) and the cylindrical inner surface (30) of the peripheral rim (24), the annular gap (18) containing elastomeric material (13), characterized in that the elastomeric material (13) is bubble-free and is fixedly connected to the contact surfaces (28, 30) of the force receiving member (11) and the support member (12).

2. Force measuring device of claim 1, characterized in that the pressure sensor (5) is provided in a recess in the elastomeric material (3) the recess being filled with a different material (4) of higher viscosity.

3. The force measuring device of claim 1 or 2, characterized in that the pressure sensor (5) is a piezo-electric sensor.

4. The force measuring device of any of the claims 1 to 3, characterized in that the elastomeric material (13) is a silicone rubber, a natural rubber, a styrene rubber, a butadiene rubber, a polysulfide-nitride rubber, a polyacrylate or a polyurethane or a mixture of two or several of these materials and completely fills the annular gap (18).

5. Force measuring device of any of the preceding claims, characterized in that the interior surface (26, 20) of the force receiving member (11) and/or the support member (12) is curved downward.

6. Force measuring device of any of the claims 1 to 5, characterized in that the elastomeric material (13) is vulcanized or bonded to the contact surfaces (20, 26, 28, 30) of the force receiving member (11) and the support member (12).

7. Force measuring device of claim 6, characterized in that the annular gap (18) has a width in the order of $1/100 : 1/1000$ of the diameter of the two elements (11, 12) and a height in the order between $1/10$ and $1/50$ of the diameter.

8. Force measuring device of any of the preceding claims, characterized in that the pressure sensor (5) is an absolute pressure sensor (15) embedded in the elastomeric material (13) in spaced relationship to the interior surfaces (20, 26) of the two elements (11, 12).

9. Force measuring device including two plates (1, 2) of large areal extension having an elastic intermediate layer provided therebetween, characterized in that elastic intermediate layer is a bubble-free elastomeric material (3) in which a plurality of pressure sensors (5) is embedded in spaced relationship and is commonly connected to a measuring device (6) and that the elastomeric material (3) is fixedly connected, in particular vulcanized or bonded to the contact surfaces of the two plates (1, 2).

10. Method for manufacturing a force measuring device according to any of the claims 1 to 9, characterized in that curing is initiated in a components' mixture for a curable elastomeric material (3, 13) that a desired quantity of the mixture is poured into a cuplike support member (12) of a force measuring device serving as a die, and that the cuplike support member (12) is caused to orbit about a vertical axis such that the caused centrifugal forces act essentially perpendicular onto the filled-in components' mixture.

11. Method or claim 10, characterized in that the orbitting is performed for a time of several seconds up to several minutes and that the final curing is performed in rest.

**Revendications**

1. Dispositif dynamométrique avec un élément capteur de force (1; 11), un élément support (2; 12) et un matériau élastomère (3; 13) prévus entre eux, qui est relié à un capteur de pression (5, 15), l'élément support (12) possédant un bord périphérique (24) prolongé vers le haut, et l'élément capteur de force (11) étant inséré dans le bord circulaire (24) en formant un espace ou jeu annulaire (18) entre l'enveloppe périphérique (28) de l'élément capteur de force (11) et la surface intérieure cylindrique (30) du bord circulaire (24), un matériau élastomère (13) se trouvant dans l'espace annulaire (18), caractérisé en ce que le matériau élastomère (13) est exempt de bulles et est relié fermement aux surfaces de contact (28, 30) de l'élément capteur de force (11) et de l'élément support (12).

2. Dispositif dynamométrique selon la revendication 1, caractérisé en ce que le capteur de pression (5) se trouve dans un évidement dans le matériau élastomère (3), qui est rempli d'un autre matériau (4) de viscosité plus élevée.

3. Dispositif dynamométrique selon la revendication 1 ou 2, caractérisé en ce que le capteur de pression (5) est un capteur piézo électrique.

4. Dispositif dynamométrique selon une des revendications 1 à 3, caractérisé en ce que le matériau élastomère (13) est un caoutchouc siliconé, un caoutchouc naturel, un caoutchouc de styrène, de butadiène, de polysulfure, de nitrile, un polyacrylate ou un polyuréthane ou un mélange de deux ou de plusieurs de ces matériaux et remplit complètement l'espace annulaire (18).

5. Dispositif dynamométrique selon une des revendications qui précèdent, caractérisé en ce que la surface (26, 20) de l'élément capteur de force (11) et/ou de l'élément support (12) est bombé vers le bas.

6. Dispositif dynamométrique selon une des revendications 1 à 5, caractérisé en ce que le matériau élastomère (13) est vulcanisé ou collé aux surfaces de contact (20, 26, 28, 30) de l'élément capteur de force (11) et de l'élément support (12).

7. Dispositif dynamométrique selon la revendication 6, caractérisé en ce que l'espace (18) possède une largeur d'un ordre de grandeur compris entre $1/100$ et $1/1000^e$ du diamètre des deux éléments (11, 12), et une hauteur d'un ordre de grandeur compris entre $1/10^e$ et $1/50^e$ du diamètre.

8. Dispositif dynamométrique selon une des revendications qui précèdent, caractérisé en ce que le capteur de pression (5) est un capteur de pression absolue (15) qui est logé dans un matériau élastomère (13) à distance des surfaces intérieures (20, 26) des deux éléments (11, 12).

9. Dispositif dynamométrique avec deux plaques de grande dimension (1, 2), entre lesquelles une couche intermédiaire élastique est disposée, caractérisé en ce que la couche intermédiaire élastique est un matériau élastomère exempt de bulles (3), dans lequel une série de capteurs de pression (5) sont logés à distance l'un de l'autre et sont raccordés en commun à un dispositif de mesure (6), et le matériau élastomère (3) est fixé, en particulier vulcanisé ou collé aux surfaces de contact des deux plaques (1, 2).

10, Procédé pour la fabrication d'un dispositif dynamométrique selon une des revendications 1 à 9, caractérisé en ce que le durcisseur est introduit dans un mélange de composants pour un matériau élastomère durcissable (3, 13), une quantité désirée du mélange est coulée dans un élément support en forme de coque servant déjà de forme (12) d'un dispositif dynamométrique, et en ce que l'élément support en forme de coque (12) est amené en rotation autour d'un axe vertical, de manière telle que les forces centrifuges entrant en jeu exercent essentiellement une action perpendiculaire sur le mélange des composants.

11. Procédé selon la revendication 10, caractérisé en ce que la rotation est exercée pendant quelques secondes à quelques minutes, le durcissement définitif s'effectuant au repos.

Fig 1

Fig. 2

Fig. 3